# EUROPÄISCHE PATENTANMELDUNG

(11) **EP 1 484 142 A1**
(43) Veröffentlichungstag der Anmeldung: **08.12.2004**
(21) Anmeldenummer: 04012904.1
(22) Anmeldetag: 01.06.2004
(51) Int. Cl.: B25J 15/06, B65G 47/91, B66C 1/02, B25B 11/00

(54) **Saugheber mit einer Zylinder- Hubelement- Anordnung zum Erzeugen eines Unterdrucks**

(30) Priorität: 02.06.2003 DE 10324835
(71) Anmelder: Kirner, Thomas, 85551 Kirchheim b. München (DE)
(72) Erfinder: Kirner, Thomas, 85551 Kirchheim b. München (DE)
(74) Vertreter: Winter, Brandl, Fürniss, Hübner, Röss, Kaiser, Polte, Partnerschaft

(57) **Zusammenfassung**

Offenbart ist ein Saugheber zum Ansaugen eines Körpers mit einer Zylinder-Hubelement-Anordnung (4,8,120), wobei über eine Hubbewegung des Hubelements (8,120) ein Unterdruck erzeugt wird, der den Körper ansaugt und das Hubelement (8,120) mittels Druckluft betreibbar ist.

## Beschreibung

Die Erfindung betrifft einen Saugheber zum Ansaugen von Körpern nach dem Oberbegriff des Patentanspruchs 1.

Es ist bekannt, einen Körper über Erzeugung eines Unterdrucks anzusaugen. Dabei wird ein Sauger mit einem dem Körper zugewandten offenen Saugraum in Anlage mit dem Körper gebracht bis der Saugraum durch den Körper verschlossen ist. Der Saugraum steht in Verbindung mit einer Unterdruckquelle, die bei anliegendem Körper den Saugraum mit einem Unterdruck beaufschlagt, so dass der Körper angesaugt und an dem Sauger gehalten wird.

Derartige Lösungen sind beispielsweise in der DE 199 39 792 A1 und der DE 199 39 792 A1 gezeigt, bei der der Sauger an einem Kolben eines Hubzylinders angeordnet ist. Der Saugraum des Saugers ist über Druckleitungen in seinem Innern mit einer Unterdruckquelle verbunden. Die Druckleitungen sind so angeordnet, dass in Abhängigkeit von der Stellung eines Kolbens im Hubzylinder eine Öffnung oder Blockierung einzelner Druckleitungen erfolgt, so dass entweder eine Hubbewegung des Kolbens oder eine Vakuumbeaufschlagung des Saugraums und somit ein Ansaugen des Körpers stattfindet.

Nachteilig an diesen Lösungen ist, dass der zum Ansaugen der plattenartigen Körper notwendige Unterdruck über eine externe Unterdruckquelle aufgebracht wird, was den vorrichtungstechnischen Aufbau und die Störanfälligkeit erhöht. Beispielhafte Unterdruckquellen sind elektrisch betriebene Lamellenpumpen, Ejektoren, die nach dem Venturi-Prinzip mit Druckluft ein Vakuum erzeugen oder wasserbetriebene Ringpumpen. Dabei hat sich gerade bei den Ejektoren gezeigt, daß große Mengen von Druckluft zur Erzeugung eines ausreichenden Vakuums notwendig sind.

Eine bekannte Lösung ohne eine externe Unterdruckquelle zur Erzeugung eines Unterdrucks ist der Saugheber VacuMaster Eco der Firma Schmalz GmbH, D-72293 Glatten, www.schmalz.de. Dieser Saugheber sieht einen Sauger an einem Zylinder vor, der mit einem Zylinderraum in Verbindung steht. Durch eine Ausfahrbewegung eines Kolbens im Zylinder wird der Zylinderraum vergrößert, wodurch sich ein Unterdruck aufbaut. Zum Anheben eines Körpers wird der Zylinder über seinen Kolben bspw. an einen Kran gehängt, wobei er sich über den Sauger auf dem Körper abstützt. Der Zylinderraum ist in dieser Grundstellung minimiert. Der Kran wird entsprechend angesteuert und der Kolben führt eine Ausfahrbewegung aus, wodurch sich das Volumen des Zylinderraums vergrößert und ein Unterdruck aufgebaut wird, der den Körper ansaugt. Wenn genügend Unterdruck aufgebaut ist, werden der Körper und der Zylinder angehoben. Zum Absetzen des angesaugten Körpers wird dieser auf einer Grundfläche abgelegt und der Kolben führt eine Einfahrbewegung aus, so daß der Unterdruck aufgehoben wird.

Nachteilig an dieser Lösung ist, daß dieser Saugheber sehr schwer und groß ausgeführt ist, da ein Abheben des Zylinders beim ausfahrenden Kolben zur Volumenvergrößerung des Zylinderraums zum Aufbauen des Unterdrucks zu Beginn zu verhindern ist.

Des Weiteren ist nachteilig, daß aufgrund des Gewichts und der Größe des Saughebers nur schwere und große Körper angesaugt werden können. Ferner ist nachteilig, daß ein schnelles Ablegen der Körper. und Aufheben des Unterdrucks nicht möglich ist, da der Kolben zum Ablegen in seine Grundstellung überführt werden muß, um den Unterdruck gänzlich aufzuheben.

Aufgabe der vorliegenden Erfindung ist es, einen Saugheber zu schaffen, der die vorgenannten Nachteile beseitigt und vorrichtungstechnisch einfach und kostengünstig herzustellen ist.

Diese Aufgabe wird gelöst durch einen Saugheber mit den Merkmalen nach dem Patentanspruch 1.

Der Saugheber zum Ansaugen von Körpern weist eine Zylinder-Hubelement-Anordnung und einen einen Saugraum bildenden Sauger auf, dessen Saugraum bei anliegendem Körper mit einem Unterdruck beaufschlagbar ist. Der Unterdruck wird über eine Hubbewegung eines Hubelements erzeugt, wodurch ein mit dem Saugraum in Verbindung stehender Druckraum der Zylinder-Hubelement-Anordnung vergrößert und somit ein Unterdruck aufgebaut wird, der den Körper ansaugt. Erfindungsgemäß ist das Hubelement zum Ausführen einer Hubbewegung druckluft betätigbar. Das Hubelement ist vorzugsweise ein verfahrbarer Kolben oder eine umschlag- bzw. umklappbare Membran.

Vorteilhaft an dem erfindungsgemäßen Saugheber ist, dass keine externe Unterdruckquelle zum Erzeugen des Unterdrucks notwendig ist, sondern dieser ausschließlich über eine Volumenvergrößerung des Zylinders erreicht wird. Somit kann auf eine Unterdruckquelle verzichtet werden, was merklich den vorrichtungstechnischen Aufbau und die Störanfälligkeit senkt.

Des Weiteren ist vorteilhaft, daß durch die Druckluftbetätigung des Hubelements zum Ein- und/oder Ausfahren das Gewicht des Zylinders unberücksichtigt bleibt, so daß der erfindungsgemäße Saugheber sehr leicht und kompakt ausführbar ist und somit ebenfalls kleine, leichte und vorallem zerbrechliche Körper wie z.B. optische Linsen für die Mikrooptik angesaugt werden können.

Prinzipiell gibt es zwei Stellungen des Saughebers. Die erste ist die Grundstellung, d.h. hubelementausgefahrener Zustand, in der das Volumen des saugerabgewandten Druckraums der Zylinder-Hubelement-Anordnung minimiert und das Volumen des saugerseitigen Druckraums der Anordnung maximiert ist. Die zweite Stellung ist die Endstellung, d.h. hubelementeingefahrener Zustand, in der das Hubelement über eine Druckluftquelle mit einem Druck beaufschlagt ist, so dass das Volumen des saugerabgewandten Druckraums maximiert und das Volumen des saugerseitigen Druckraums minimiert ist.

Dabei ist im Vergleich zum Ejektor nach dem Venturi Prinzip nur ein Bruchteil an Druckluft notwendig, um den Saugheber aus seiner Grundstellung in die Endstellung zu bewegen, wodurch der Druckluftverbrauch minimal ist.

Zur Realisierung einer kompakten Baugröße ist der mit dem Saugraum des Saugers in Verbindung stehende Druckraum ein Zylinderraum des Zylinders. Beide Räume stehen über eine Saugbohrung in einem Zylinderraumdeckel in Verbindung.

Um den Sauger von der Zylinder-Hubelement-Anordnung örtlich zu trennen, kann eine Saugleitung zwischen dem Druckraum und dem Saugraum vorgesehen sein.

Vorzugsweise ist der Kolben stufenförmig ausgebildet und taucht im ausgefahrenen Zustand in eine entsprechende Gegenkontur des Zylinderraumdeckels ein, so daß eine Radialfläche einer Stufe als Hubbegrenzungsfläche für den Kolben nutzbar ist.

Bei einer Ausführungsform ist eine Feder vorgesehen, die das Hubelement in seiner Grundstellung vorspannt. Um das Hubelement entgegen der Federkraft in seine Endstellung zu überführen, ist zum saugerabgewandten Druckraum, hier ein Ringraum, eine Anschlußbohrung zum Einleiten der Druckluft ausgebildet.

Wenn als Hubelement eine Membran verwendet wird, ist bei einer Ausführungsform der Zylinder zweiteilig mit einem oberen und einem unteren Zylinderteil ausgeführt, wobei die Membran mit ihrem Außenumfangsbereich zwischen diesen Zylinderteilen eingeklemmt ist. In der Membran ist eine Durchgangsöffnung eingebracht, die von einer zweiteiligen Kolbenstange umgriffen ist. Der Zylinderraum und der Ringraum sind entgegengesetzt konisch ausgebildet, so daß die Membran im wesentlichen plan an deren Innenumfangsflächen anliegen kann.

Wenn als Hubelement ein Kolben verwendet wird, sieht eine Ausführungsform vor, den Kolben ausschließlich über Beaufschlagung mit Druckluft zu verfahren, so daß die Vorspannung des Kolbens in Grundstellung entfallen kann. Dabei ist dem ersten Kolben ein zweiter Kolben zugeordnet, der einen zweiten Ringraum bildet. Zwischen den beiden Kolben ist eine ortsfeste Trennwand angeordnet, die von einer Kolbenstange der Kolben durchsetzt ist und den ersten Ringraum in einen Arbeitsraum und einen Leerraum unterteilt. Zum Einleiten von Druckluft in den zweiten Ringraum und den Arbeitsraum sind im Zylindermantel Anschlußbohrungen ausgebildet. Der Leerraum ist über eine Entlüftungsleitung gegenüber seiner Außenumgebung druckentlastet.

Zum Ansaugen eines Körpers bzw. Überführen des Saughebers in seine Grundstellung wird der Arbeitsraum mit Druckluft beaufschlagt, während zum Einfahren der Kolben der zweite Ringraum mit Druckluft beaufschlagt wird. Der Leerraum verbleibt über seine Entlüftungsleitung drucklos.

Um einen angesaugten Körper bei einer Aufhebung des Unterdrucks sicher von dem Sauger lösen zu können, ist der Körper über eine Druckleitung mit einem Druckimpuls beaufschlagbar.

Bei einer Ausführungsform ist die Druckleitung zwischen dem Ringraum und dem Zylinderraum angeordnet.

Bei einer anderen Ausführungsform ist die Druckleitung zwischen der Außenumgebung des Saughebers und dem Zylinderraum angeordnet, wobei die Druckleitung in einen Druckluftanschluß zum Einleiten des Druckimpuls in den Zylinderraum mündet.

Damit der Körper nicht versehentlich mit einem Druckimpuls beim Überführen des Saughebers von seiner Grundstellung in seine Endstellung beaufschlagt wird, ist vorzugsweise in der Druckleitung ein Rückschlagventil mit freiem Durchgang in Richtung des Zylinderraums angeordnet, dass beispielsweise bei einem Öffnungsdruck von etwa 4 bar zum Saugraum hin öffnet.

Vorzugsweise ist die Druckleitung mit dem Rückschlagventil in dem Kolben bzw. in einer Kolbenstange integriert, so dass sowohl ein Schutz der Druckleitung vor Beschädigungen als auch eine besonders kompakte und einfach herzustellende Bauweise des Saughebers realisiert ist.

Zum Schutz des angesaugten Körpers vor Beschädigungen und um ein abdichtendes Anliegen des Saugers an dem Körper zu erzielen, ist diese trichterförmig und aus einem elastischen kunststoffartigen Material gefertigt.

Ein Heben oder Senken des Saghebers kann über einen Hubzylinder erfolgen, der mit dem Saugheber in Verbindung steht.

Sonstige vorteilhafte Ausführungsformen sind Gegenstand weiterer Unteransprüche.

Im Folgenden erfolgt eine ausführliche Erläuterung bevorzugter Ausführungsformen der Erfindung anhand schematischer Darstellungen. Es zeigen
Figur 1 eine geschnittene Seitenansicht einer bevorzugten Ausführungsform des erfindungsgemäßen Saughebers in Grundstellung,
Figur 2 eine geschnittene Seitenansicht des Saughebers aus Figur 1 in Endstellung,
Figur 3 eine geschnittene Seitenansicht einer anderen Ausführungsform des Saughebers in Endstellung,
Figur 4 eine geschnittene Seitenansicht einer weiteren Ausführungsform des Saughebers in Endstellung, und
Figur 5 eine geschnittene Seitenansicht einer weiteren bevorzugten Ausführungsform des erfindungsgemäßen Saughebers in Endstellung.

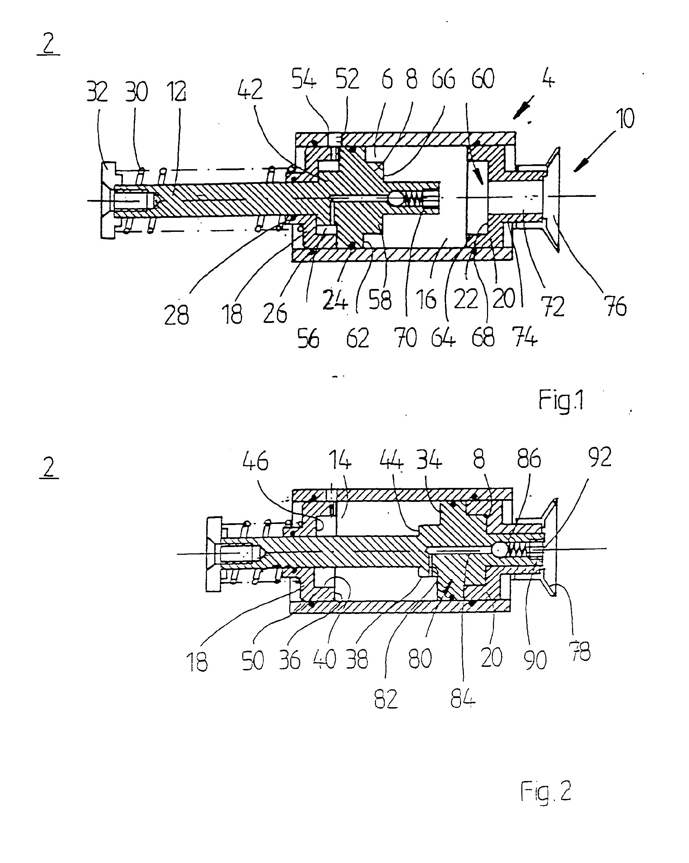

Figur 1 zeigt eine bevorzugte Ausführungsform eines erfindungsgemäßen Saughebers 2 zum Ansaugen von Körpern mit einem Zylinder 4, in dessen Innenraum 6 verschiebbar ein Hubelement - hier ein Kolben 8 - aufgenommen ist und der mit einem Sauger 10 in Wirkverbindung steht.

Der Kolben 8 ist einstückig mit seiner Kolbenstange 12 ausgebildet. Er unterteilt den Innenraum 6 des Zylinders 4 in einen Ringraum 14 und einen Zylinderraum 16, die durch einen stufenartigen Ringraumraumdeckel 18 und einen stufenartigen Zylinderraumdeckel 20 axial begrenzt sind.

Um einen unkontrollierten Druckluftstrom und um ein Entweichen der Druckluft bzw. ein Eindringen von Außenluft in den Ringraum 14 und den Zylinderraum 16 zu verhindern, sind diese über Dichtringe 22, 24, 26, 28 im Kolben 8, im Ringraumdeckel 18 und im Zylinderraumdeckel 20 abgedichtet. Der Kolben 8 ist über eine Feder 30, die zwischen dem Ringraumdeckel 18 und einem an der Kolbenstange 12 befestigten Federteller 32 angeordnet ist, in seiner Grundstellung vorgespannt.

In der vorgespannten Grundstellung ist der Kolben 8 ausgefahren und liegt mit einer radial außenliegenden ringraumseitigen Ringstirnfläche 34 an einer stirnseitigen Hübbegrenzungsfläche 36 des Ringraumdeckels 18 an. D.h. das Volumen des Ringraums 14 ist minimiert, wohingegen das Volumen des Zylinderraums 16 maximiert ist. Das Volumen des Ringraums 14 ist im wesentlichen auf einen Ringbereich 56 zwischen der Innenwandung 38 eines Ringraumdeckelmantels 50 und der gegenüberliegenden Außenwandung 40 eines radial zurückgesetzten Ringraumkolbenbereichs 42 beschränkt. Die axiale Länge des Außenwandung 40 des Ringraumkolbenbereichs 42 ist dabei so gewählt, dass dieser Kolbenbereich 42 mit seiner Stirnfläche 44 von der gegenüberliegenden axial zurückgesetzten Stirnfläche 46 des Ringraumdeckels 18 beabstandet ist.

Im Zylindermantel 48 ist in einem sich mit dem Ringraumdeckelmantel 50 überdeckenden Bereich eine Anschlußbohrung 52 zum Anschluß einer Druckluftquelle (nicht dargestellt) ausgebildet. Fluchtend zu dieser ist in dem Ringraumdeckelmantel 50 eine Durchgangsbohrung 54 vorgesehen, die in den verbleibenden Ringbereich 56 mündet, so dass bei Anschluß eine Druckluftquelle der Kolben 8 ringraumseitig mit Druckluft beaufschlagt werden kann, die den Kolben 8 entgegen der Federkraft der Feder 30 in eine Endstellung überführt, in der das Volumen des Zylinderraums 16 minimiert und das Volumen des Ringraums 14 maximiert ist. Somit befindet sich der Kolben 8 in einer Position, in der durch eine Einfahrbewegung ein Unterdruck im Zylinderraum 16 aufbaubar und somit ein Ansaugen eines am Sauger 10 anliegenden Körpers erfolgen kann. Eine derartige Endstellung ist in Figur 2 dargestellt.

In der Endstellung ist der Kolben 8 eingefahren und taucht mit einem radial zurückgesetzten Zylinderraumkolbenbereich 58 in eine entsprechende Gegenkontur 60 des Zylinderraumdeckels 20 ein. Dabei liegt er mit einer radial außenliegenden zylinderraumseitigen Ringstirnfläche 62 an einer stirnseitigen Hubbegrenzungsfläche 64 des Zylinderraumdeckels 20 an, während die Stirnfläche 66 des zurückgesetzten Zylinderraumkolbenbereichs 58 von der gegenüberliegenden Stirnfläche 68 des Zylinderraumdeckels 20 beabstandet ist. Dadurch entsteht ein Restraum 88, so daß ein Festsaugen oder Verhaken sich gegenüberliegender Flächen 62, 64, 66, 68 verhindert ist.

Gleichzeitig taucht der ebenfalls radial zurückgesetzte freie Endabschnitt 70 des Zylinderraumkolbenbereichs 58 in eine in dem Zylinderraumdeckel 20 ausgebildete Saugbohrung 72 ein. Die Saugbohrung 72 ist in einem rohrartigen, axial ausgerichteten Mittelbereich 74 des Zylinderraumdeckels 20 ausgebildet und erstreckt sich vom Zylinderraum 16 zum Saugraum 76 des den rohrartigen Mittelbereich 74 umgreifenden Saugers 10. Um den Sauger örtlich von dem Zylinder 4 zu trennen, ist es vorstellbar, die Saugbohrung mittels einer nicht dargestellten Saugleitung z.B. in Form eines flexiblen Schlauchs, zu verlängern, so daß der Saugraum 76 und der Druckraum 16 über die Saugleitung miteinander in Verbindung stehen. Radial wird der Saugraum 76 von der Innenumfangsfläche 78 des Saugers 10 begrenzt und axial zum Einen durch einen am Sauger 10 anliegenden anzusaugenden Körper (nicht dargestellt). Zum Anderen wird der Saugraum 76 axial durch den in die Saugbohrung 72 eintauchenden freien Endabschnitt 70 des Zylinderraumkolbenbereichs 58 begrenzt, wobei jedoch bei einer Ausfahrbewegung des Kolbens 8 der freie Endabschnitt 70 zurückfährt und somit der Saugraum 76 zum Zylinderraum 16 hin geöffnet wird. Vorzugsweise ist der Sauger 10 trichterförmig und aus einem elastischen, kunststoffartigen Material.

In dem Kolben 8 ist eine Druckleitung 80 mit einem radialen und einem axialen Druckkanal 82, 84 ausgebildet. Diese beiden Druckkanäle 82, 84 erstrecken sich vom Ringraum 14 und vom Saugraum 76 bzw. Zylinderraum 16 und münden ineinander, so dass eine Verbindung zwischen dem Ringraum 14 und dem Saugraum 76 bzw. dem Zylinderraum 16 hergestellt ist. In dem axialen Druckkanal 84 ist ein Rückschlagventil 86 angeordnet, dass in Richtung des Ringraums 14 sperrt. Das Rückschlagventil 86 ist über einen Schraubeinsatz 90, in dem eine Drosselbohrung 92 ausgebildet ist, im axialen Druckkanal 84 gesichert. Somit kann bei Öffnung des Rückschlagventils 86 Druckluft aus dem Ringraum 14 in den Saugraum 76 strömen. Eine Öffnung des Rückschlagventils 86 in Richtung des Saugraums 76 erfolgt bei einem Öffnungsdruck, der größer ist als der notwendige Druck, um den Kolben 8 entgegen der Federkraft der Feder 30 in die Endstellung zu bringen. vorstellbar ist zum Beispiel ein Öffnungsdruck von etwa 4 bar. Durch diese Druckleitung 80 und dieses Rückschlagventil 86 ist es möglich, einen aufgenommenen und nach Überführung des Saughebers 2 in seine Endstellung nicht vom Sauger 10 zu lösenden Körper mit einem Druckimpuls zu beaufschlagen, so dass der Körper abgelegt werden kann.

Da über die Kolbenbewegung kein Hub des angesaugten Körpers erfolgt, ist es vorstellbar, den Saugheber 2 an einem Handlinggerät zum Heben, Senken, Schwenken und Transportieren des aufgenommenen Körpers zu befestigen.

Im Folgenden wird die Funktionsweise des Saughebers 2 beschrieben:

Um einen Körper gemäß Figur 2 anzusaugen wird der Saugheber 2 in seine Endstellung überführt. D.h. der Kolben 8 liegt über ringraumseitige Druckluftbeaufschlagung an der zylinderraumseitigen Hubbegrenzungsfläche 64 an, so dass das Volumen des Zylinderraums 16 minimiert und das des Ringraums 14 maximiert ist. Dabei wird der Saugheber 2 so positioniert, dass der Sauger 10 an dem aufzunehmenden Körper anliegt und somit der Saugraum 76 verschlossen ist. Anschließend wird der Ringraum 14 mit Niederdruck, beispielsweise mit dem Umgebungsdruck beaufschlagt, so dass der Kolben 8 über die Federkraft der Feder 30 ausgefahren wird. Dadurch vergrößert sich das Volumen des Zylinderraums 16 und das des Ringraums 14 verkleinert sich. Durch die Vergrößerung des Zylinderraumvolumens 16 entsteht ein Unterdruck, der den Körper in verschließender Richtung an dem Sauger 10 sichert und im Zylinderraum 16 einen Unterdruck entstehen lässt.

Sobald der Körper sicher angesaugt ist, kann der Saugheber 2 beispielsweise über das Handlinggerät und zu einer Ablage (nicht dargestellt) für den Körper bewegt werden.

Ist der Saugheber 2 in Bezug zur der Ablage richtig positioniert, wird der Kolben 8 ringraumseitig mit Druckluft beaufschlagt, so dass dieser entgegen der Federkraft mit einer Kraft beaufschlagt wird, die den Kolben 8 einfährt, und sich somit das Volumen des Ringraums 4 vergrößert und das des Zylinderraums 16 verkleinert. Durch das Verkleinern des Zylinderraumsvolumens 16 wird der Unterdruck im Ringraum 14 aufgehoben und der Körper kann in der Ablage abgelegt werden.

Sollte sich der Körper aufgrund einer Klebewirkung seiner Oberfläche mit dem Sauger 10 nicht sofort vom Sauger 10 lösen, so wird über die Druckluftquelle der Ringraum 14 derartig mit Druckluft beaufschlagt, dass das Rückschlagventil 86 in der Druckleitung 80 öffnet und somit der anhaftende Körper mit einem Druckimpuls beaufschlagt wird.

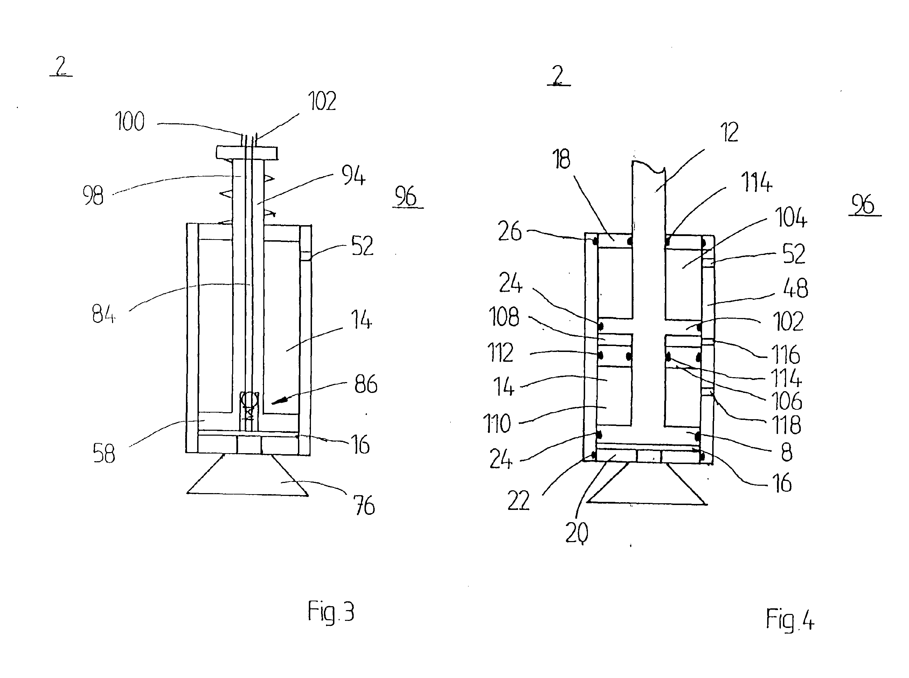

Eine weitere mögliche Ausführungsform des erfindungsgemäßen Saughebers 2 ist stark vereinfacht in Figur 3 dargestellt. Der wesentliche Unterschied zur vorbeschriebenen Ausführungsform besteht darin, daß eine Druckleitung 94 zum Beaufschlagen eines angesaugten Körpers mit einem Druckimpuls zum Ablegen des Körpers nicht zwischen einem Ringraum 14 und einem Zylinderraum 16, sondern zwischen einer Außenumgebung 96 und dem Zylinderraum 16 angeordnet ist.

Die Druckleitung 94 erstreckt sich als ein axialer Druckkanal 84, der sich in Längsrichtung durch eine Kolbenstange 12 und einen Kolben 8 erstreckt. Im kolbenseitigen Endabschnitt 58 de Druckkanals 84 ist das Rückschlagventil 86 mit Durchgangsrichtung in Richtung des Zylinderraums 16 bzw. Saugraums 76 angeordnet. Im gegenüberliegenden, federtellerseitigen Endabschnitt 100 des Druckkanals 84 ist ein Druckluftanschluß 102 zum Einleiten von Druckluft ausgebildet. Wahlweise kann an diesen Druckluftanschluß 102 die gleiche Druckluftquelle wie an der Anschlußbohrung 52 oder eine weitere Drckluftquelle angeschlossen sein. Sollte die gleiche Druckluftquelle zum Einspeisen von Druckluft verwendet werden, so bedarf dies einer besonderen Ansteuerung der Druckluftquelle, beispielsweise entsprechend eines Logikelements, um ein versehntliches Einleiten von Druckluft in den Druckkanal 84 zu vermeiden.

Vorteilhaft an dieser Ausführungsform ist, daß ein defektes Rückschlagventil 86, dessen Ist-Entsperrdruck wesentlich unterhalb des Soll-Entsperrdrucks liegt, bei einfahrendem Kolben 8 nicht zwangsläufig zu einer Drucklentlastung über das Rückschlagventil 86 führt, da das Rückschlagventil nicht über den Ringraum 14 und somit zeitgleich zum Kolben 8 mit Druckluft beaufschlagt wird, sondern über die externe Druckluftleitung 96.

Figur 4 zeigt eine weitere mögliche Ausführungsform des erfindungsgemäßen Saughebers 2 stark vereinfacht, bei der der Saugheber 2 im Gegensatz zu den beiden vorbeschriebenen Ausführungsformen nach den Figuren 1, 2 und 3 nicht über eine Feder in seiner Grundstellung vorgespannt ist.

Bei dieser Ausführungsform ist dem ersten Kolben 8 - im Folgenden Saugkolben genannt - ein zweiter Kolben 102 - im Folgenden Arbeitskolben genannt - an der Kolbenstange 12 zugeordnet, der einen zweiten saugerabgewandten Ringraum 104 bildet.

Zwischen dem Arbeitskolben 102 und dem Saugkolben 8 ist ortsfest eine scheibenartige Trennwand 106 angeordnet, die von der Kolbenstange 12 durchsetzt wird. Die Trennwand 106 unterteilt den ersten Ringraum in eine Arbeitsraum 108 und ein Leerraum 110. Dabei ist der Arbeitsraum 108 zwischen dem Arbeitskolben 102 und der Trennwand 106 und der Leerraum 110 zwischen dem Saugkolben 8 und der Trennwand 106 ausgebildet.

Die einzelnen Räume 16, 108, 110 sind über entsprechende radiale Dichtringe 22, 24, 26, 112, 114 im Bereich der Deckel 18, 20, der Trennwand 106 und des Saugkolbens 8 bzw. Arbeitskolbens 102 gegeneinander und gegenüber ihrer Außenumgebung 96 gegen Druckausgleich abgedichtet.

Im Zylindermantel 48 sind Anschlußbohrungen 52, 116 zum Einleiten von Druckluft in den zweiten Ringraum 104 und den Arbeitsraum 108 ausgebildet. Im Bereich des Leerraums 110 ist im Zylindermantel 48 eine Entlüftungsbohrung 118 zum Entlüften des Leeraums 110 gegenüber der Außenumgebung 96 angeordnet. vorzugsweise erfolgt über die Entlüftungsbohrung 118 unabhängig von der Stellung der Kolben 8, 102 ein Druckausgleich zur Außenumgebung 96.

Die Funktionsweise dieser Ausführungsform läßt sich wie folgt beschreiben:

Zum Einfahren der Kolben 8, 102 bzw. zum Überführen des Saugkolbens 8 in seine Endstellung zur Aufnahme von Körpern wird über die Anschlußbohrung 52 Druckluft in den zweiten Ringraum 104 eingespeist und der Arbeitskolben 102 mit Druckluft beaufschlagt. Dabei erfolgt über die Anschlußbohrung 116 des Arbeitsraums 108 eine Entlüftung zur Außenumgebung 96 und über die Entlüftungsleitung 118 strömt Luft von der Außenumgebung 96 drucklos in den Ringraum 14 ein.

Sobald der Zylinderraum 16 ausreichend minimiert ist, wird der Saugheber 2 mit seinem Sauger 10 auf dem anzusaugenden Körper positioniert und die Kolben 8, 102 in ihre Ausfahrstellung überführt. Dazu wird in den Arbeitsraum 108 über die Anschlußbohrung 116 Druckluft eingespeist und der Arbeitskolben 102 mit Druckluft beaufschlagt, wobei die Anschlußbohrung 52 des zweiten Ringraums 104 und die Entlüftungsbohrung 118 zur Außenumgebung 96 hin geöffnet sind. Die Kolben 8, 102 fahren aus und maximieren den Zylinderraum 16, so daß sich mit dem anliegenden Körper ein Vakuum in dem Zylinderraum 16 ausbildet.

Zum Ablegen des angesaugten Körpers ist wieder zwischen den Arbeitsanschlüssen 52, 116 des zweiten Ringraums 104 und des Arbeitsraums 108 entsprechend umzuschalten.

Vorteilhaft an dieser Ausführungsform ist, daß der Saugheber 2 von jeglicher Federkraft entkoppelt ist und somit die Ausfahrbewegung unabhängig von mechanischen Federverlusten erfolgt. Des Weiteren kann die Ausfahrbewegegung unabhängig von dem Gewicht des anzusaugenden Körpers über die Zufuhr von Druckluft hinsichtlich der Kolbengeschwindigkeit und Kolbengrundstellung genau definiert und konstant gehalten werden.

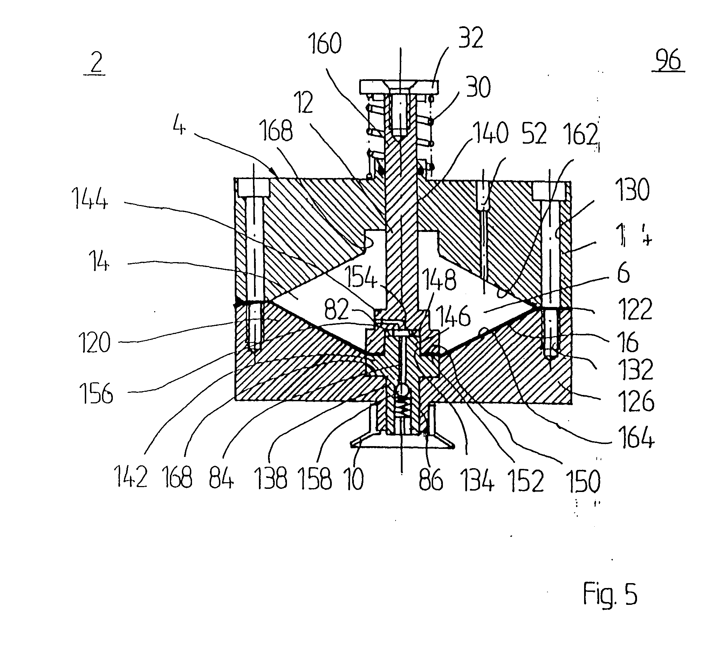

Figur 5 zeigt eine weitere bevorzugte Ausführungsform eines Saughebers 2 in Endstellung. Die Funktionsweise dieses Saughebers 2 entspricht grundsätzlich der vorbeschriebenen Funktionsweise zu den Figuren 1 und 2, bei der das Hubelement in seiner Grundstellung über eine Feder 30 vorgespannt ist, jedoch ist bei dieser Ausführungsform anstelle eines verschiebaren Kolbens 8 eine umklappbare Membran 120 im Zylinder 4 angeordnet.

Die Membran 120 unterteilt den Innenraum 6 des Zylinders 4 in den sogenannten Ringraum 14 und den sogenannten Zylinderraum 16 und vergrößert bzw. verkleinert je nach Federbelastung bzw. Druckluftbeaufschlagung die Volumina der Räume 14, 16, wodurch bei Vergrößerung des Zylinderraumvolumens ein entsprechender Unterdruck zum Ansaugen eines am Sauger 10 anliegenden Körpers entwickelt werden kann. Um ein Umklappen der Membran zu ermöglichen, ist ihr freier Außendurchmesser größer als der Innendurchmesser des Innenraum 6.

Die Membran 120 ist mit ihrem Außenumfangsbereich 122 zwischen einem oberen und einem unteren Zylinderteil 124, 126 angeordnet. An dem oberen Zylinderteil 124 stützt sich außenliegend die Feder 30 zur Vorspannung der Membran 120 in Grundstellung ab und an dem unteren Zylinderteil 126 ist der Sauger 10 angeordnet. Des Weiteren weist das obere Zylinderteil 124 die in den Ringraum 14 mündende Anschlußbohrung 52 zum Anschluß einer Druckluftquelle auf.

Die beiden Zylinderteile 124, 126 sind über nicht dargestellte Schaftschrauben miteinander verbunden, wobei die Schaftschrauben Bohrungen 130 im oberen Zylinderteil 124 sowie den Außenumfangsbereich 122 der Membran 120 durchsetzen und gewindeartig in Gewindebohrungen 132 des unteren Zylinderteils 126 aufgenommen sind. Somit ist die Membran 120 fest mit dem Zylinder 4 verbunden, wobei durch die beschriebene Befestigung die Membran 120 ebenfalls als Dichtung dient und den Innenraum 6 des Zylinders 4 gegenüber der Umgebung 96 abdichtet.

Die Membran 120 hat eine zentrale Durchgangsöffnung 134. Im Bereich 136 der Durchgangsöffnung 134 greift die Kolbenstange 12 an. Die Kolbenstange 12 ist zweigeteilt und hat einen unteren und einen oberen Kolbenstangenabschnitt 138, 140. Die Stangenabschnitte 138, 140 liegen mit Ringflächen 150, 152 stirnseitg an der Membran 120 an und sind vorzugsweise über Stoffschluß mit der Membran 120 verbunden. Zur Verbesserung der Befestigung der Kolbenstange 12 mit der Membran 120 sind die Stangenabschnitte 138, 140 mit ihren membranseitigen Endabschnitten 142, 144 stufenartig erweitert. Zusätzlich zur Erweiterung der membranseitigen Stangenendabschnitte 142, 144 durchsetzt ein axialer Vorsprung 146 des unteren membranseitigen Stangenendabschnitts 142 die Durchgangsöffnung 134 der Membran 120 und taucht in eine Ausnehmung 148 des oberen membranseitigen Stangenendabschnitts 144 ein.

Vereinfacht läßt sich sagen, daß die membranseitigen Stangenendabschnitte 142, 144 entsprechend dem Kolben 8 aus den Figuren 1 und 2 ausgebildet sind, wenn dieser entlang seinem Dichtring 22 geschnitten wird. In dem oberen membranseitigen Stangenendabschnitt 142 ist der radiale Druckkanal 82 aufgenommen und in dem unteren membranseitigen Stangenendabschnitt 144 der axiale zum Rückschlagventil 86 führende Druckkanal 84. Zur Verbindung des axialen mit dem radialen Druckkanal 82, 84 mündet der radiale Druckkanal 82 in eine axiale sich in Richtung des Saugers 10 erstreckende Sacklochbohrung 154, die wiederum in einen Hohlraum 156 zwischen dem oberen und dem unteren membranseitigen Stangenendabschnitten 142, 144 mündet, der mit dem axialen Druckkanal 84 in Verbindung steht.

Die den membranseitigen Endabschnitten 142, 144 entgegengesetzten Stangenendabschnitte 158, 160 weisen den Federteller 32 zum Angreifen der Vorspannfeder 30 bzw. das Rückschlagventil 86 auf.

Der Ringraum 14 und der Zylinderraum 16 sind entgegengesetzt konisch verjüngt, so daß sich im Längsschnitt eine Rautenform des Innenraum 6 ergibt. Durch diese Rautenform des Innenraums 6 sind seine gegenüberliegenden Innenflächen 162, 164 schräg angestellt, wodurch sich die Membran 120 an diesen in Grund- bzw. Endstellung abschnittsweise abstützen kann und entlastet wird. Zu sicheren Anlage der erweiterten Stangenendabschnitte 142, 144 der Kolbenstange 12 und zur optimalen möglichen Minimierung der Volumina der Räume 14, 16 haben der Ring- und der Zylinderraum 14, 16 entsprechend der Ausführungsform nach den Figuren 1 und 2 im Durchsetzungsbereich der Kolbenstange 12 je eine axiale Zurücksetzung 166, 168, die etwa den Außenabmessungen der radial erweiterten membranseitigen Stangenendabschnitte 142, 144 entspricht, so daß diese in die Zurücksetzungen 166, 168 zumindest abschnittsweise eintauchen können.

Wie eingangs erwähnt funktioniert diese Ausführungsform gemäß Figur 5 nach dem gleichen Prinzip wie die in den Figuren 1 und 2 beschriebene Ausführungsform.

In Grundstellung ist die Kolbenstange 12 über die Vorspannkraft der Feder 30 ausgefahren und die Membran 120 liegt an der Innenfläche 162 des oberen Zylinderteils 126 an. Folglich ist das Volumen des Ringraums 14 minimiert und das des Zylinderraums 16 ist maximiert.

Zum Ansaugen eines Körpers wird der Saugheber 2 in seine Endstellung überführt, in der das Volumen des Zylinderraums 16 minimiert ist. Der Ringraum 14 wird über die Anschlußbohrung 52 mit Druckluft beaufschlagt, so daß die Kolbenstange 12 entgegen der Federkraft einfährt, die Membran 120 umklappt und sich an der Innenfläche 164 des unteren Zylinderteils 124 anlegt. Durch das Anlegen der Membran 120 an die Innenfläche 164 des unteren Zylinderteils 124 wird das Volumen des Ringraums 14 maximiert und das des Zylinderraums 16 minimiert.

Anschließend wird der Saugheber 2 wieder in seine Grundstellung überführt. Der Ringraum 14 wird druckentlastet und die Kolbenstange 12 fährt aufgrund der Federkraft wieder aus. Die Membran 120 klappt zurück und das Volumen des Ringraums 14 wird minimiert, wobei sich durch die Vergrößerung des Volumens des Zylinderraums 16 und des am Sauger 10 anliegenden anzusaugenden Körpers ein Unterdruck im Zylinderraum 16 ausbildet, der den Körper am Sauger 10 sichert.

Zum Aufheben der Saugverbindung wird der Saugheber 2 wieder in seine Endstellung überführt, wobei der Ringraum 14 wieder mit Druckluft beaufschlagt wird und die Membran 120 zurückschlägt, so daß das Volumen des Zylinderraums 14 wieder minimiert wird. Wahlweise kann der Körper zum sicheren Lösen von dem Sauger 10 über das Rückschlagventil 86 mit einem Druckluftimpuls beaufschlagt werden.

Besonders vorteilhaft an dieser Ausführungsform ist, daß der Zylinder 4 keinen sich bewegenden Kolben 8 aufweist, der dichtend im Zylinder 4 geführt werden muß, so daß die Fertigungstoleranzen des Zylinders 4 großzügigerer gewählt werden können. Des Weiteren ist vorteilhaft, daß die Teileanzahl des Zylinders 4 aufgrund des Wegfalls eines Ringraum- und eines Zylinderraumdeckels 18, 20 reduzierbar ist.

Die Anmelderin behält es sich vor, einen Anspruch auf ein Verfahren zur Ansteuerung des Saughebers bzw. zum Ansaugen eines Körpers zu richten.

Offenbart ist ein Saugheber zum Ansaugen eines Körpers mit einer Zylinder-Hubelement-Anordnung, wobei über eine Hubbewegung des Hubelements ein Unterdruck erzeugt wird, der den Körper ansaugt und das Hubelement mittels Druckluft betreibbar ist.

### Bezugzeichenliste

- 2: Saugheber
- 4: Zylinder
- 6: Innenraum
- 8: Kolben, Saugkolben
- 10: Sauger
- 12: Kolbenstange
- 14: Ringraum
- 16: Zylinderraum
- 18: Ringraumdeckel
- 20: Zylinderraumdeckel
- 22: Dichtring
- 24: Dichtring
- 26: Dichtring
- 28: Dichtring
- 30: Feder
- 32: Federteller
- 34: Ringstirnfläche
- 36: Hubbegrenzungsfläche
- 38: Innenwandung
- 40: Außenwandung
- 42: Ringraumkolbenbereich
- 44: Stirnfläche
- 46: Stirnfläche
- 48: Zylindermantel
- 50: Ringraumdeckelmantel
- 52: Anschlußbohrung
- 54: Durchgangsbohrung
- 56: Ringbereich
- 58: Zylinderraumkolbenbereich
- 60: Gegenkontur
- 62: Ringstirnfläche
- 64: Hubbegrenzungsfläche
- 66: Stirnfläche
- 68: Stirnfläche
- 70: freier Endabschnitt
- 72: Saugbohrung
- 74: Mittelbereich
- 76: Saugraum
- 78: Innenumfangsfläche
- 80: Druckleitung
- 82: radiale Druckkanal
- 84: axialer Druckkanal
- 86: Rückschlagventil
- 88: Restraum
- 90: Schraubeinsatz
- 92: Drosselbohrung
- 94: Druckleitung
- 96: Außenumgebung
- 98: federtellerseitiger Endabschnitt
- 100: Druckluftanschluß
- 102: zweiter Kolben, Arbeitskolben
- 104: zweiter Ringraum
- 106: Trennwand
- 108: Arbeitsraum
- 110: Leerraum
- 112: Dichtring
- 114: Dichtring
- 116: Anschlußbohrung
- 118: Entlüftungsbohrung
- 120: Membran
- 122: Außenumfangsbereich
- 124: unterer Zylinderteil
- 126: oberer Zylinderteil
- 130: Bohrung
- 132: Gewindebohrung
- 134: Durchgangsöffnung
- 136: Durchgangsöffnungsbereich
- 138: unterer Stangenabschnitt
- 140: oberer Stangeabschnitt
- 142: unterer Endabschnitt
- 144: oberer Endabschnitt
- 146: Vorsprung
- 148: Ausnehmung
- 150: Ringfläche
- 152: Ringfläche
- 154: Sacklochbohrung
- 156: Hohlraum
- 158: oberer Endabschnitt
- 160: unterer Endabschnitt
- 162: Innenfläche
- 164: Innenfläche
- 166: Zurücksetzung
- 168: Zurücksetzung

## Patentansprüche

1. Saugheber zum Ansaugen von Körpern mit einem auf einem Körper aufsetzbaren Sauger (10), dessen Saugraum (76) mit Unterdruck beaufschlagbar ist, **dadurch gekennzeichnet, dass** ein Zylinder (4) einen mit dem Saugraum (76) verbundenen Druckraum (16) aufweist, dessen Volumen durch einen Hub eines Hubelements (8; 120), insbesondere ein Kolben (8) oder eine Membran (120), vergrößerbar und so ein Unterdruck aufbaubar ist, wobei das Hubelement (8; 120) mittels Druckluft betätigbar ist.

2. Saugheber nach Patentanspruch 1, wobei der Druckraum (16) ein Zylinderraum ist, der über eine Saugbohrung (72) im Zylinderraumdeckel (20) mit dem Saugraum (76) verbunden ist.

3. Saugheber nach Patentanspruch 2, wobei eine Saugleitung zum Verbinden des Saugraums (76) mit dem Zylinderraum (16) vorgesehen ist, so daß der Sauger (10) von dem Zylinder (4) örtlich getrennt ist.

4. Saugheber nach Patentanspruch 1, 2 oder 3, wobei der Kolben (8) stufenförmig ausgebildet ist und in Endstellung in eine entsprechende Gegenkontur (60) des Zylinderraumdeckels (20) eintaucht, so dass das Volumen des Zylinderraums (16) minimiert ist.

5. Saugheber nach einem der vorhergehenden Patentansprüche, wobei zwischen dem Zylinderraum (16) und einem Ringraum (14) eine Druckleitung (80) angeordnet ist.

6. Saugheber nach einem der vorhergehenden Patentansprüche, wobei zwischen dem Zylinderraum (16) und einer Außenumgebung (96) eine Druckleitung (94) angeordnet ist, wobei die Druckleitung (84) in einem Druckluftanschluß (100) zum Einleiten von Druckluft in den Zylinderraum (16) mündet.

7. Saugheber nach Patentanspruch 5 oder 6, wobei in der Druckleitung (80, 94) ein Rückschlagventil (86) mit freiem Durchgang in Richtung des Zylinderraums (16) angeordnet ist.

8. Saugheber nach Patentanspruch 7, wobei die Druckleitung (80, 94) und das Rückschlagventil (86) im Kolben (8) bzw. in einer Kolbenstange (12) angeordnet sind.

9. Saugheber nach Patentanspruch 7 oder 8, wobei das Rückschlagventil (86) bei einem Öffnungsdruck von etwa 4 bar die Druckleitung (80, 94) in Richtung Saugraum (76) öffnet.

10. Saugheber nach einem der vorhergehenden Patentansprüche, wobei das Hubelement (8; 120) über eine Feder (30) in Grundstellung vorgespannt ist, in der das Volumen des Zylinderraums (16) maximiert ist.

11. Saugheber nach einem der Patentansprüche 1 bis 9, wobei dem ersten Kolben (8) ein zweiter Kolben (102) zugeordnet ist, der einen zweiten Ringraum (104) bildet.

12. Saugheber nach Patentanspruch 11, wobei zwischen den beiden Kolben (8, 102) eine Trennwand (112) angeordnet ist, die von der Kolbenstange (12) durchsetzt ist und den ersten Ringraum (14) in einen Arbeitsraum (108) und einen Leerraum (110) unterteilt.

13. Saugheber nach einem der Patentansprüche 11 oder 12, wobei im Zylindermantel (48) Anschlußbohrungen (52, 116) zum Einleiten von Druckluft in den Ringraum (14) und/oder den Arbeitsraum (108) ausgebildet sind.

14. Saugheber nach Patentanspruch 12, wobei der Leerraum (110) über eine Entlüftungsbohrung (118) gegenüber der Außenumgebung (96) druckentlastet ist.

15. Saugheber nach einem der Patentanspruch 1 bis 10, wobei die Membran (120) mit ihrem Außenumfangsbereich (122) zwischen einem oberen und einem unteren Zylinderteil (124, 126) des Zylinders (4) eingeklemmt ist.

16. Saugheber nach Patentanspruch 15, wobei die Membran eine Durchgangsöffnung (134) hat und der Durchgangsöffnungsbereich (136) zwischen einem oberen und einem unteren Kolbenstangenabschnitt (138, 142) angeordnet ist.

17. Saugheber nach Patentansprch 15 oder 16, wobei sich der Zylinderraum (16) und der Ringraum (14) in entgegengesetzte Richtungen konisch verjüngen, so daß sich ein rautenförmiger Innenraum (6) ergibt.

18. Saugheber nach einem der vorhergehenden Patentansprüche, wobei der Sauger (10) trichterförmig ausgebildet ist und vorzugsweise aus einem elastischen Material hergestellt ist.

19. Saugheber nach einem der vorhergehenden Patentansprüche, wobei der Saugheber (2) zum Heben, Senken, Schwenken oder Transportieren des angesaugten Körpers an einem Handlinggerät angeordnet ist.
